# EUROPÄISCHE PATENTSCHRIFT

(11) **EP 3 982 147 B1**
(45) Veröffentlichungstag und Bekanntmachung des Hinweises auf die Patenterteilung: **18.12.2024**
(21) Anmeldenummer: 20200389.3
(22) Anmeldetag: 06.10.2020
(51) Int. Cl.: G01S 5/02, G08B 21/02

(54) **SYSTEM ZUR BESTIMMUNG UND DARSTELLUNG VON POSITIONSABHÄNGIGEN DATEN VON SENSORSENDERN IN BEZUG AUF EINE JEWEILIGE EMPFANGSSTATION**
SYSTEM FOR DETERMINING AND DISPLAYING POSITION-DEPENDENT DATA FROM SENSOR TRANSMITTERS RELATIVE TO EACH RECEIVING STATION
SYSTÈME DE DÉTERMINATION ET DE REPRÉSENTATION DES DONNÉES DÉPENDANT DE LA POSITION DES ÉMETTEURS À CAPTEUR PAR RAPPORT À UNE STATION RÉCEPTRICE RESPECTIVE

(43) Veröffentlichungstag der Anmeldung: 13.04.2022
(73) Patentinhaber: MC-Technologies GmbH, 30179 Hannover (DE)
(72) Erfinder: Bannach, Matthias, 31311 Hänigsen (DE)
(74) Vertreter: Farago-Schauer, Peter Andreas

(56) Entgegenhaltungen:
- DE-A1- 102015 225 388
- KR-B1- 102 078 156
- US-A1- 2016 165 566

## Beschreibung

Die vorliegende Erfindung betrifft eine Systemvorrichtung zur Bestimmung von positionsabhängigen Daten mindestens eines Senders, der Nutzdaten und ortsabhängige Positionsdaten als Informationsdaten drahtlos aussendet, in Bezug zu einer jeweiligen Empfangsstation, gemäß dem Oberbegriff von Anspruch 1, und ein dementsprechendes Verfahren gemäß dem Oberbegriff von Anspruch 5.

Bekannt sind Empfangsstationen, die Nutzdaten drahtlos von dem einen oder den mehreren Sendern empfangen und die Nutzdaten entweder selbst auswerten oder insgesamt an einen Endempfänger oder eine Endempfänger-Auswerte Applikation weiterleiten. Unter den Sendern können solche Sender verstanden werden, die beispielsweise mit einem oder mehreren Sensoren verbunden sind oder solche umfassen. Solche Sender können beispielsweise Telematikgeräte sein, die unter den Begriffen M2M- oder Machine-to-Machine Interface bekannt sind. Solche Sender können beispielsweise in Kaffeemaschinen, in Druckern, Gebäuden und an Baukränen verbaut sein, um diese zu überwachen. Eine Weiterleitung der Nutzdaten von Empfangsstationen an den Endempfänger kann entweder drahtlos, beispielsweise durch ein Funkmodul, oder drahtgebunden, beispielsweise durch eine LAN und/oder Internetverbindung erfolgen.

Bei einem Aufstellen der Empfangsstationen um den einen oder die mehreren Sender ist darauf zu achten, dass jeweils eine genügend gute Verbindung zwischen der jeweiligen Empfangsstation und dem jeweiligen Sender vorherrscht. Bei einer Installation zusätzlicher neuer Sender wird meist kurz analysiert, ob einer der schon vorhandenen Empfangsstationen den jeweiligen neuen Sender empfängt oder nicht, und bei Bedarf wird eine zusätzliche Empfangsstation in einem Übertragungsnetzwerk zu dem Endempfänger hinzugefügt. In einem großen Empfangsgebiet beispielsweise von einigen Häuserblocks und bei zahlreichen Sendern können zahlreiche zusätzliche Empfangsstationen notwendig werden, um das Übertragungsnetzwerk zum Endempfänger herzustellen, wobei die Netzwerksystemkosten entsprechend ansteigen.

US 2016/165566 A1 offenbart ein Verfahren zu einer Erzeugung einer Datenbank mit Empfangsfeldstärken von zwei oder mehreren Empfängern von einer Vielzahl an Sendern, die jeweils mit mindestens zwei der Empfänger Kontakt haben und deren GPS-Ortsdaten bekannt sind. So lässt sich der jeweilige Sender auch, wenn er keine GPS-Ortsdaten empfängt, unter Verwendung der Empfangsfeldstärken von mindestens zwei und besser drei Empfängern, die an verschiedenen Orten sitzen, lokalisieren, beispielsweise auch in Räumen, wo kein GPS-Signal empfangen werden kann.

DE 10 2015 225388 A1 offenbart ein Verfahren und System zu einer Analyse einer Umgebung eines mobilen Endgeräts, wobei in der Umgebung verschiedene Lichtquellen jeweils ein damit verbundenes Code-Signal aufmoduliert abstrahlen und das mobile Endgerät über einen optischen Sensor, wie beispielsweise eine integrierte Kamera, verfügt, der das jeweilige Code-Signal empfängt, in dessen Bereich es sich befindet. So kann das mobile Endgerät auch ohne GPS-Signale seine Lage bestimmen.

KR 102 078 156 B1 offenbart ein Verfahren und eine Vorrichtung zur Ortsbestimmung eines Endgeräts in Bezug zu verschiedenen lokal vorbestimmten Sendeantennen, indem die Empfangsfeldstärken von Sendesignalen der verschiedenen Sendeantennen ausgewertet werden.

Aufgabe der Erfindung, um die Nachteile aus dem Stand der Technik zu beseitigen, ist es, eine Systemvorrichtung und ein Verfahren bereitzustellen, mit dem zusätzlich hinzugefügte Sender mit möglichst geringem Aufwand und Kosten in ein Übertragungsnetzwerk zu einem Endempfänger angebunden werden können.

Die vorstehende Aufgabe wird von einer Vorrichtung gemäß den Merkmalen des unabhängigen Anspruchs 1 und einem Verfahren gemäß den Merkmalen des unabhängigen Anspruchs 5 gelöst. Weitere vorteilhafte Ausführungsformen der Erfindung sind in den jeweils abhängigen Ansprüchen angegeben.

Erfindungsgemäß wird eine Systemvorrichtung zur Bestimmung von positionsabhängigen Daten mindestens eines Senders zur Verfügung gestellt, der Nutzdaten und ortsabhängige Positionsdaten als Informationsdaten drahtlos aussendet, wobei die positionsabhängigen Daten in Bezug zu einer jeweiligen Empfangsstation in einem Empfangsgebiet bestimmt werden, und wobei die Systemvorrichtung Folgendes umfasst:
a) die mindestens eine Empfangsstation, die jeweils einen Empfänger aufweist, der von dem jeweiligen Sender die Informationsdaten mit einem jeweiligen Signalfeldstärkewert empfängt, dadurch gekennzeichnet, dass
b) die jeweilige Empfangsstation einen Datenseparator aufweist, der aus den jeweiligen Informationsdaten die ortsabhängigen Positionsdaten des Senders extrahiert und zusammen mit dem jeweiligen Signalfeldstärkewert als die positionsabhängigen Daten zu einer externen Positionsdatenauswerteeinheit weiterleitet, und die zusätzlich die jeweiligen Informationsdaten oder zumindest daraus die Nutzdaten an einen Endempfänger weitergeleitet;
c) wobei die Systemvorrichtung die Positionsdatenauswerteeinheit aufweist, die ausgebildet ist, die positionsabhängigen Daten in Bezug zur jeweiligen Empfangsstation über eine Zeitdauer abzuspeichern und daraus eine Signalfeldstärkekarte um die jeweiligen Empfangsstationen im Empfangsgebiet zu erzeugen und darzustellen;
d) wobei die Empfangsstation ausgebildet ist, auch Empfangsstations-Ortsdaten als Ortsdaten der Empfangsstation selbst automatisch zu bestimmen und zusammen mit den positionsabhängigen Daten der Sender an die Positionsdatenauswerteeinheit weiterzuleiten; und
e) wobei die Positionsdatenauswerteeinheit ausgebildet ist, sowohl die positionsabhängigen Daten um die dazugehörige Empfangsstation herum abzubilden, als auch dabei eine Verschiebung der dazugehörigen Empfangsstation gemäß der übermittelten Empfangsstations-Ortsdaten zu berücksichtigen.

Ein wesentlicher Vorteil der vorliegenden Erfindung besteht beispielsweise darin, durch eine Speicherung der positionsabhängigen Daten in der Positionsdatenauswerteeinheit die Veränderung der Signalfeldstärke über einer Zeit abzubilden, wodurch sich Umwelteinflüsse erkennen lassen, die in eine Positionierung weiterer Sender dementsprechend berücksichtigt werden können.

Ein wesentlicher Vorteil der vorliegenden Erfindung besteht beispielsweise darin, dass ein vorher bestehendes Übertragungssystem zwischen vorher bestehenden Sendern, die keine ortsabhängigen Positionsdaten aussenden, vorher bestehenden Empfangsstationen, die den Datenseparator nicht aufweisen, und dem Endempfänger, zunächst die erfindungsgemäßen Empfangsstationen eingebaut und dann nach und nach die vorher bestehenden Sender ausgetauscht werden durch die Sender, die die ortsabhängigen Positionsdaten aussenden. So lässt sich das vorher bestehende Übertragungssystem schrittweise erweitern.

Bevorzugt können auch die vorher bestehenden Sender weiterverwendet werden, die zwar keine ortsabhängigen Positionsdaten empfangen, die aber in den Informationsdaten eine Sender-Kennung oder Sender-ID zusätzlich zu den Nutzdaten mitsenden, wobei die Sender-Kennung/-ID die ortsabhängigen Positionsdaten darstellen. Der Sender-Kennung/-ID kann dabei durch eine Datenzuordnung ein vorbestimmter Ort zugewiesen werden, so dass auch die vorher bestehenden Sender gut in der erfindungsgemäßen Systemvorrichtung integrierbar sind.

Ein weiterer wesentlicher Vorteil der vorliegenden Erfindung besteht darin, dass durch bevorzugt ortsveränderliche Sender, die durch das Empfangsgebiet getragen oder bewegt werden können, die Signalfeldstärkekarte mit einer höheren Auflösung, als wenn die Sender nicht verschoben würden, erzeugt wird. Einem Anwender oder einer Applikation eines Mikroprozessorsystems wird dadurch eine bessere Auswertung ermöglicht, wo und wie viele der Empfangsstationen idealerweise im Empfangsgebiet zu positionieren sind, um alle Sender sicher zu empfangen. Auf diese Weise lassen sich sowohl die Anzahl der Empfangsstationen auf ein Minimum reduzieren als auch eine jeweilige minimale Signalstärke sicherstellen.

Ein weiterer wesentlicher Vorteil der vorliegenden Erfindung besteht darin, dass ein Ort des jeweiligen Senders kontinuierlich bestimmt wird, und sich dadurch eine örtliche Verschiebung feststellen lässt. Durch eine entsprechende Applikationsauswertung mit einem Alarmausgang läßt sich sehr einfach eine Diebstahlsicherung erzeugen.

Bevorzugt erfolgt die Darstellung der Signalfeldstärkekarte an einem Monitor oder als ein Druckerplot. Weiter bevorzugt erfolgt die Darstellung als Superposition in einem Gebäude- oder Geländeplan. Weiter bevorzugt ermittelt die Applikation des Mikroprozessorsystems die optimalen Standorte der Empfangsstationen.

Bevorzugt weist die Systemvorrichtung zusätzlich den mindestens einen Sender auf, der jeweils die Nutzdaten und die ortsabhängige Positionsdaten bestimmt und als die jeweilige Informationsdaten drahtlos aussendet. Der Sender kann die ortsabhängigen Positionsdaten beispielsweise auch dadurch bestimmen, indem er fest eingespeicherte Daten ausliest, beispielsweise als Geräte-ID. Bevorzugt ist der Sender ein Funksender.

Der Sender kann beispielsweise einen oder mehrere Sensoren aufweisen oder mit dem/den Sensor/en verbunden sein, wobei die Nutzdaten im Wesentlichen die Sensordaten sind. Bevorzugt werden die Nutzdaten und die Informationsdaten seriell übermittelt. Beispielsweise kann der Sender in einem Gebäude, einer Maschine, wie in einer Kaffeemaschine oder an einem Kran befestigt sein. Bevorzugt ist der Sender so ausgebildet, dass er die Ortsdaten aus empfangenen Signalstärken umliegender anderer Sender bestimmt und dabei bevorzugt deren Kennungen empfängt. Die Ortsdaten können auch bevorzugt durch optische oder akustische Daten bestimmt werden, wie beispielsweise durch Kamerabilder. Bevorzugt werden die Ortsdaten aus GNSS Daten bestimmt, wie beispielsweise GPS oder Galileo Signalen. Bevorzugt können die Ortsdaten aber auch manuell oder durch Sprache eingegeben werden.

Bevorzugt werden von der Empfangsstation drahtlos sowohl die positionsabhängigen Daten und die Empfangsstations-Ortsdaten an die Positionsdatenauswerteeinheit als auch die Informationsdaten oder zumindest die Nutzdaten an den Endempfänger jeweils drahtlos weiterleitet. An dieser Stelle sei bemerkt, dass ein Teil der ortsabhängigen Positionsdaten, wie beispielsweise die Sender-Kennung, an den Endempfänger weitergeleitet werden kann.

Die Positionsdatenauswerteeinheit kann bevorzugt auch so ausgebildet sein, dass aus verschiedenen Feldstärkewerten, die von mindestens zwei verschiedenen Empfangsstationen zu einem gleichen Sender bestimmt und weitergeleitet worden sind, nach einem Triangulationsprinzip weitere Ortsdaten bestimmt werden, die zur Ortsbestimmung des jeweiligen Senders mitberücksichtigt werden.

Die jeweilige Empfangsstation ist bevorzugt ausgebildet, an den Endempfänger jeweils gleiche Basisdaten aus Nutzdaten und Sensorkennung ohne die positionsabhängigen Daten weiterzuleiten, so dass für eine Nutzdatenübertragung zum Endempfänger sowohl die Sender verwendet werden können, die in den Informationsdaten die ortsabhängigen Positionsdaten mitsenden, also auch solche Sender verwendet werden können, die keine ortsabhängigen Positionsdaten mitsenden, wie beispielsweise die vorher bestehenden Sender des vorher bestehenden Übertragungssystems.

Bevorzugt ist die Empfangsstation ähnlich einem Repeater oder einem Proxy ausgebildet.

Bevorzugt enthalten die ortsabhängigen Positionsdaten mindestens eine oder mehrere der folgenden Daten: Daten aus denen eine Position bestimmt werden kann, absolute Positionsdaten, relative Positionsdaten, manuell eingegebene Positionsdaten, GPS-Daten, Galileo-Daten, Beacon-Daten in der Nähe sich befindlicher WIFI-Stationen, Positionsdaten, die über eine Kameraerkennung bestimmt worden sind, Ortsdaten, die über eine Triangulation von Empfangsdaten verschiedener Sender bestimmt worden sind, eine aktuelle Zeit, eine Sender-Kennung, oder Positionsdaten, die über eine Spracherkennung bestimmt worden sind.

Bevorzugt werden von der Empfangsstation mit den jeweils aktuellen positionsabhängigen Daten noch ein jeweils aktueller Zeitstempel mitgesendet. Bevorzugt können von der Empfangsstation auch nur veränderte ortsabhängigen Positionsdaten an die Positionsdatenauswerteeinheit weitergeleitet werden.

Bevorzugt sendet der jeweilige Sender die Informationsdaten über einen drahtlosen System-Bus oder M-Bus aus.

Ein entsprechendes erfindungsgemäßes Verfahren zur Übertragung und Bestimmung der positionsabhängigen Daten des mindestens einen Senders, der die Nutzdaten und die ortsabhängigen Positionsdaten als Informationsdaten drahtlos aussendet, in Bezug zur mindestens einer Empfangsstation im Empfangsgebiet umfasst folgende Schritte:
a) Empfangen durch die jeweilige Empfangsstation der jeweiligen Informationsdaten und zusätzliches Bestimmen des jeweiligen Signalfeldstärkewerts; gekennzeichnet durch
b) Bestimmen der positionsabhängigen Daten des jeweiligen Senders durch die jeweilige Empfangsstation, wobei die ortsabhängigen Positionsdaten aus den jeweiligen Informationsdaten extrahiert werden und der jeweilige Signalfeldstärkewert hinzugefügt wird;
c) Weiterleiten der positionsabhängigen Daten zur externen Positionsdatenauswerteeinheit, und Weiterleiten der jeweiligen Informationsdaten oder zumindest daraus der Nutzdaten an einen Endempfänger;
d) Abspeichern der positionsabhängigen Daten zu der jeweiligen Empfangsstation in der Positionsdatenauswerteeinheit und Bestimmen und Darstellen von Signalfeldstärken im Empfangsgebiet, die aus den gespeicherten jeweiligen Signalfeldstärkewerten erzeugt werden; und
e) örtlich Verschieben der mindestens einen Empfangsstation, Bestimmen deren Empfangsstations-Ortsdaten, und Weiterleiten der Empfangsstations-Ortsdaten zusammen mit den positionsabhängigen Daten an die Positionsdatenauswerteeinheit.

Die Vorteile des erfindungsgemäßen Verfahrens sind die gleichen wie die der Systemvorrichtung.

Bevorzugt werden dabei zusätzlichen die jeweiligen Informationsdaten mit darin den Nutzdaten und den ortsabhängigen Positionsdaten des jeweiligen Senders durch den jeweiligen Sender bestimmt und ausgesendet.

Beim örtlichen Verschieben der mindestens einen Empfangsstation, dem Bestimmen deren Empfangsstations-Ortsdaten, und dem Weiterleiten der Empfangsstations-Ortsdaten zusammen mit den positionsabhängigen Daten an die Positionsdatenauswerteeinheit werden bevorzugt die Signalfeldstärken der Sender zum jeweiligen Ort der Empfangsstation aufgezeichnet und dargestellt oder ausgewertet.

Bevorzugt werden durch die Empfangsstation aus den Informationsdaten die ortsabhängigen Positionsdaten herausgefiltert und entsprechend ohne die ortsabhängigen Positionsdaten an den Endempfänger weitergeleitet.

Bevorzugt alternativ können von der Empfangsstation an den Endempfänger auch die Informationsdaten oder die positionsabhängigen Daten oder Teile davon mitgesendet werden.

Bevorzugt werden die Informationsdaten vom jeweiligen Sender über ein Signal drahtlos ausgesendet und von der jeweiligen Empfangsstation entsprechend empfangen.

Bevorzugt werden von der Positionsdatenauswerteeinheit aus den Signalfeldstärken mindestens eine Signalfeldstärke-Höhenlinie im Empfangsgebiet um die jeweilige Empfangsstation herum bestimmt. Dabei können die Signalfeldstärken im Empfangsgebiet um die jeweilige Empfangsstation auch farblich dargestellt werden. Bevorzugt wird die mindestens eine Signalfeldstärke-Höhenlinie im Empfangsgebiet auf einem Monitor oder als ein Ausdruck dargestellt. Andere Darstellungen der Signalfeldstärken im Empfangsgebiet sind ebenso, wie im Stand der Technik bekannt, vorstellbar. Beispielsweise kann die Darstellung der Signalfeldstärken im Empfangsgebiet auch über einer Landkarte oder über einem architektonischen Gebäudegrundriss erfolgen, beispielsweise durch darin eingebrachte Höhenlinien oder Höhenlinienbereiche für eine jeweilige vorbestimmte Signalfeldstärke um die jeweiligen Empfangsstationen herum, die darin bevorzugt farblich dargestellt werden.

Bevorzugt werden Positionsdaten und Signalfeldstärken dreidimensional (3D) dargestellt, um die Feldstärken in einem Gebäude oder in einer anderen dreidimensionalen Struktur darzustellen.

Bevorzugt können durch die Positionsdatenauswerteeinheit aus den positionsabhängigen Daten zeitliche Veränderungen der Signalfeldstärken bestimmt werden.

Weitere bevorzugte Ausführungsformen gemäß der vorliegenden Erfindung sind in nachfolgenden Zeichnungen und in einer detaillierten Beschreibung dargestellt, sie sollen aber die vorliegende Erfindung nicht ausschließlich darauf begrenzen.

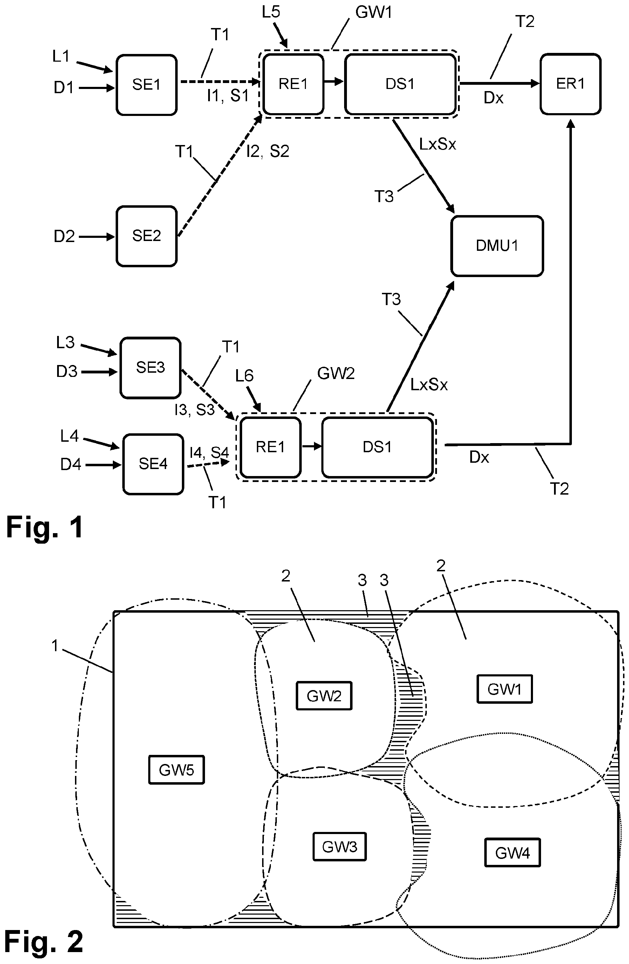

Es zeigen
- Fig. 1: als schematische Skizze eine bevorzugte Systemvorrichtung zur Bestimmung von positionsabhängigen Daten von drei Sendern, die jeweils Nutzdaten und ortsabhängige Positionsdaten empfangen, bevorzugt verarbeiten und als Informationsdaten drahtlos zu einer jeweiligen Empfangsstation aussenden, die jeweils die Informationsdaten mit einer jeweiligen Signalfeldstärke empfangen und die positionsabhängigen Daten zu einer Positionsdatenauswerteeinheit weiterleiten und die die Nutzdaten zu einem Endempfänger weiterleiten; der zweite Sender von oben empfängt keine ortsabhängigen Positionsdaten; und
- Fig. 2: schematisch ein rechteckiges Empfangsgebiet mit fünf verschiedenen darin angeordneten Empfangsstationen, um die jeweils dazugehörige Höhenlinien eingezeichnet sind, die einem vorbestimmten noch empfangbaren Feldstärkewert eines gleichen Senders erlauben.

### Detaillierte Beschreibung von Ausführungsbeispielen

In Fig. 1 ist eine mögliche Ausführungsform einer Systemvorrichtung dargestellt, die zu einer Bestimmung von positionsabhängigen Daten LxSx mindestens eines Senders SE1 - SE4, der Nutzdaten D1 - D4 und ortsabhängige Positionsdaten L1 - L4 als Informationsdaten I1-I4 drahtlos aussendet, dient und zwar in Bezug zu einer jeweiligen Empfangsstation GW1, GW2 und in einem Empfangsgebiet 1. Die Systemvorrichtung umfasst dabei Folgendes:
a) die mindestens eine Empfangsstation GW1, GW2, die jeweils einen Empfänger RE1 aufweist, der von dem jeweiligen Sender SE1 - SE4 die Informationsdaten I1 - I4 mit einem jeweiligen Signalfeldstärkewert S1 - S4 empfängt;
   wobei erfindungsgemäß
b) die jeweilige Empfangsstation GW1, GW2 einen Datenseparator DS1 aufweist, der aus den jeweiligen Informationsdaten I1 - I4 die ortsabhängigen Positionsdaten L1 - L4 des Senders SE1 - SE4 extrahiert und zusammen mit dem jeweiligen Signalfeldstärkewert S1 - S4 als die positionsabhängigen Daten LxSx zu einer externen Positionsdatenauswerteeinheit DMU1 weiterleitet, und die zusätzlich die jeweiligen Informationsdaten I1 - I4 oder zumindest daraus die Nutzdaten D1 - D4 an einen Endempfänger ER1 weitergeleitet; und
c) wobei die Systemvorrichtung die Positionsdatenauswerteeinheit DMU1 aufweist, die ausgebildet ist, die positionsabhängigen Daten LxSx in Bezug zur jeweiligen Empfangsstation GW1, GW2 über eine Zeitdauer abzuspeichern und daraus eine Signalfeldstärkekarte um die jeweilige Empfangsstationen GW1, GW2 im Empfangsgebiet 1 zu erzeugen und darzustellen.

In der bevorzugten Ausführungsform von Fig. 1 empfängt ein erster Sender SE1 erste Nutzdaten D1 beispielsweise durch einen oder mehrere Sensoren und erste Positionsdaten L1 beispielsweise als GPS-Daten und leitet diese über einen ersten Übertragungskanal T1 als erste Informationsdaten I1 an eine erste Empfängerstation GW1 weiter. Die erste Empfängerstation GW1 bestimmt zu den empfangenen ersten Informationsdaten I1 einen ersten Signalfeldstärkewert S1. Daraufhin extrahiert die erste Empfängerstation GW1 aus den ersten Informationsdaten I1 die ersten Positionsdaten L1 und sendet diese zusammen mit dem ersten Signalfeldstärkewert S1 als die positionsabhängigen Daten LxSx über einen dritten Übertragungskanal T3 weiter an die Positionsdatenauswerteeinheit DMU1. Die ersten Informationsdaten I1 oder ein Teil davon oder zumindest die ersten Nutzdaten D1 werden über einen zweiten Übertragungskanal T2 weitergeleitet and den Endempfänger ER1.

Ein zweiter Sender SE2 empfängt zweite Nutzdaten D2, ohne aber externe Positionsdaten zu empfangen, wohingegen er seine Sender-Kennung als zweite Positionsdaten verwenden kann, und er sendet die zweiten Nutzdaten D2 zusammen mit den zweiten Positionsdaten als zweite Informationsdaten I2 über einen weiteren ersten Übertragungskanal T1 an die erste Empfängerstation GW1. Die erste Empfängerstation GW1 bestimmt auch zu den empfangenen zweiten Informationsdaten I2 einen zweiten Signalfeldstärkewert S2. Daraufhin extrahiert die erste Empfängerstation GW1 aus den zweiten Informationsdaten I2 die zweiten Positionsdaten L2 und sendet diese zusammen mit dem zweiten Signalfeldstärkewert S2 als zugehörige positionsabhängigen Daten LxSx über den dritten Übertragungskanal T3 weiter an die Positionsdatenauswerteeinheit DMU1.

Bevorzugt ist oder umfasst der erste Übertragungskanal T1 einen System-Bus oder M-Bus, einen Feldbus, ein Zigbee oder Bluetooth Funksignal oder ein beliebiges anderes Funksignal.

Bevorzugt ist oder umfasst der zweite Übertragungskanal T2 einen System-Bus oder M-Bus, einen Feldbus, ein Zigbee oder Bluetooth Funksignal, ein beliebiges anderes Funksignal oder einen LAN Kanal und/oder einen Internetkanal.

Bevorzugt ist oder umfasst der dritte Übertragungskanal T3 einen System-Bus oder M-Bus, einen Feldbus, ein Zigbee oder Bluetooth Funksignal, ein beliebiges anderes Funksignal oder einen LAN Kanal und/oder einen Internetkanal.

Es ist auch denkbar, dass der zweite T2 und dritte Übertragungskanal T3 streckenweise einen gemeinsamen Kanal teilen, wie beispielsweise den Internetkanal oder einen Funkkanal basierend beispielsweise auf GPRS, LTE oder UMTS.

In der bevorzugten Ausführungsform von Fig. 1 empfängt ein dritter Sender SE3 dritte Nutzdaten D3 beispielsweise durch einen oder mehrere Sensoren und dritte Positionsdaten L3 beispielsweise als GPS-Daten und leitet diese über einen weiteren ersten Übertragungskanal T1 als dritte Informationsdaten I3 an eine zweite Empfängerstation GW2 weiter. Die zweite Empfängerstation GW2 bestimmt zu den empfangenen dritten Informationsdaten I3 einen dritten Signalfeldstärkewert S3. Daraufhin extrahiert die zweite Empfängerstation GW2 aus den dritten Informationsdaten I3 die dritten Positionsdaten L3 und sendet diese zusammen mit dem dritten Signalfeldstärkewert S3 als die jeweiligen positionsabhängigen Daten LxSx über einen weiteren dritten Übertragungskanal T3 weiter an die Positionsdatenauswerteeinheit DMU1. Die dritten Informationsdaten I3 oder ein Teil davon oder zumindest die dritten Nutzdaten D3 werden über einen weiteren zweiten Übertragungskanal T2 weitergeleitet and den Endempfänger ER1.

Ein vierter Sender SE4 empfängt vierte Nutzdaten D4 und vierte Positionsdaten L4 oder eine verwendet die jeweilige Sender-Kennung als die vierten Positionsdaten L4, und er sendet die vierten Nutzdaten D4 zusammen mit den vierten Positionsdaten L4 als vierte Informationsdaten I4 über den weiteren ersten Übertragungskanal T1 an die zweite Empfängerstation GW2. Die zweite Empfängerstation GW2 bestimmt auch zu den empfangenen vierten Informationsdaten I4 einen vierten Signalfeldstärkewert S4. Daraufhin extrahiert die zweite Empfängerstation GW2 aus den vierten Informationsdaten I4 die vierten Positionsdaten L4 und sendet diese zusammen mit dem vierten Signalfeldstärkewert S4 als zugehörige positionsabhängigen Daten LxSx über den weiteren dritten Übertragungskanal T3 weiter an die Positionsdatenauswerteeinheit DMU1.

Bevorzugt sind die erste GW1 und/oder die zweite Empfangsstation GW2 ortsveränderlich und bevorzugt empfängt die eine oder beide Empfangsstationen GW1, GW2 jeweilige Empfangsstations-Ortsdaten L5, L6, die von der jeweiligen Empfangsstation GW1, GW2 zusammen mit den positionsabhängigen Daten LxSx an die Positionsdatenauswerteeinheit DMU1 weitergeleitet werden.

Fig. 2 zeigt schematisch das Empfangsgebiet 1, das in der dargestellten beispielartigen Form rechteckig ist. Jede andere Form ist auch möglich. In der Darstellung des Empfangsgebiets 1 könnten auch architektonische Grundrisse mit eingezeichnet sein. Im dargestellten Empfangsgebiet 1 sind eine erste Empfangsstation GW1, eine zweite Empfangsstation GW2, eine dritte Empfangsstation GW3, eine vierte Empfangsstation GW4 und eine fünfte Empfangsstation GW5 eingezeichnet, um die jeweils Empfangsbereiche 2 mit jeweils einer Höhenlinie einer vorbestimmten Signalfeldstärke eingetragen sind. Die jeweiligen Höhenlinien der vorbestimmten Signalfeldstärke weisen eine jeweils unterschiedlicher Strichlierung auf. Bereiche ohne einen genügenden Empfang 3 sind auch eingetragen, die aufzeigen, in welche Richtung die entsprechenden Empfangsstationen GW1 - GW5 zu verschieben wären, um solche Bereiche auszuschließen, oder in welchen Bereichen noch eine weitere Empfangsstation GW1- GW5 angeordnet werden könnte.

Zur Klarheit sei angemerkt, dass unbestimmte Artikel in Verbindung mit einem Gegenstand oder Zahlenangaben, wie beispielsweise "ein" Gegenstand den Gegenstand nicht zahlenmäßig auf genau einen Gegenstand begrenzt, sondern, dass damit gemeint ist, dass mindestens "ein" Gegenstand damit gemeint ist. Dies gilt für alle unbestimmten Artikel wie beispielsweise "ein", "eine" usw.

Es versteht sich, dass wenn ein Element als "auf" einem anderen Element angebracht, damit "verbunden", "gekoppelt" oder "in Kontakt" zu sein bezeichnet wird, das Element sich dann direkt auf dem anderen Element befinden, damit verbunden oder gekoppelt sein kann, oder dass außerdem dazwischenliegende Elemente vorhanden sein können, die entweder nur dazwischen liegen oder das Element mit dem anderen Element verbinden oder koppeln oder in Kontakt halten. Wenn hingegen ein Element als "direkt auf" einem anderen Element, damit "direkt verbunden", "direkt gekoppelt" oder "direkt in Kontakt" bezeichnet wird, ist zu verstehen, dass keine dazwischenliegenden Elemente vorhanden sind.

Obwohl Ausdrücke "erstes", "zweites" usw. hierin verwendet werden können, um verschiedene Elemente, Komponenten, Bereiche und/oder Abschnitte zu bezeichnen, sind diese Elemente, Komponenten, Bereiche und/oder Abschnitte nicht durch diese Ausdrücke beschränkt. Die Ausdrücke werden nur verwendet, um ein Element eine Komponente, einen Bereich oder Abschnitt von einem anderen Element einer anderen Komponente, einem anderen Bereich oder Abschnitt zu unterscheiden. Daher kann ein erstes Element, eine erste Komponente, ein erster Bereich oder Abschnitt, die unten behandelt sind, als zweites Element, zweite Komponente, zweiter Bereich oder Abschnitt bezeichnet werden, ohne von den Lehren der vorliegenden Erfindung abzuweichen.

Zum Begriff "umfassen" sei zur Klarheit gesagt, dass wenn ein erster Vorrichtungsteil einen zweiten Vorrichtungsteil umfasst, dies bedeutet, dass der erste Vorrichtungsteil den zweiten Vorrichtungsteil "aufweist" und nicht notwendigerweise anordnungsmäßig umschließt, wenn es sich nicht beispielsweise um eine Beschreibung einer lagemäßigen und formenmäßigen Anordnung handelt; das Gleiche gilt für ein Verfahren, das einen oder mehrere Verfahrensschritte umfassen kann.

Weitere mögliche Ausbildungsformen sind in den folgenden Ansprüchen beschrieben. Insbesondere können auch die verschiedenen Merkmale der oben beschriebenen Ausführungsformen miteinander kombiniert werden, soweit sie sich nicht technisch ausschließen.

Die In den Ansprüchen genannten Bezugszeichen dienen nur der besseren Verständlichkeit und beschränken die Ansprüche in keiner Weise auf die in den Figuren dargestellten Formen.

### Bezugszeichenliste

- 1: Empfangsgebiet
- 2: Empfangsbereich
- 3: Bereich ohne genügenden Empfang
- D1, D2, D3, D4: erste, zweite, dritte, vierte Nutzdaten
- DM U 1: Positionsdatenauswerteeinheit
- DS1: Datenseparator
- Dx: Ausgangsdaten der Empfangsstation
- ER1: End-Empfänger
- GW1 - GW5: erste - fünfte Empfangsstation (Gateway)
- I1, I2: erste, zweite Informationsdaten
- L1, L3, L4: erste, dritte , vierte Positionsdaten
- L5, L6: Empfangsstations-Ortsdaten
- LxSx: positionsabhängige Daten
- RE1: Empfänger
- S1, S2: erste, zweite Signalfeldstärke
- SE1 - SE4: erster - vierter Sender
- T1: erster Übertragungskanal
- T2: zweiter Übertragungskanal
- T3: dritter Übertragungskanal

## Patentansprüche

1. Systemvorrichtung zur Bestimmung von positionsabhängigen Daten (LxSx) mindestens eines Senders (SE1-SE4), der Nutzdaten (D1-D4) und ortsabhängige Positionsdaten (L1-L4) als Informationsdaten (I1-I4) drahtlos aussendet, in Bezug zu einer jeweiligen Empfangsstation (GW1, GW2) in einem Empfangsgebiet (1), umfassend:
a) die mindestens eine Empfangsstation (GW1, GW2), die jeweils einen Empfänger (RE1) aufweist, der von dem jeweiligen Sender (SE1-SE4) die Informationsdaten (I1-I4) mit einem jeweiligen Signalfeldstärkewert (S1-S4) empfängt;
b) wobei die jeweilige Empfangsstation (GW1, GW2) einen Datenseparator (DS1) aufweist, der aus den jeweiligen Informationsdaten (I1-I4) die ortsabhängigen Positionsdaten (L1-L4) des Senders (SE1-SE4) extrahiert und zusammen mit dem jeweiligen Signalfeldstärkewert (S1-S4) als die positionsabhängigen Daten (LxSx) zu einer externen Positionsdatenauswerteeinheit (DMU1) weiterleitet, und die zusätzlich die jeweiligen Informationsdaten (I1-I4) oder zumindest daraus die Nutzdaten (D1-D4) an einen Endempfänger (ER1) weitergeleitet;
c) wobei die Systemvorrichtung die Positionsdatenauswerteeinheit (DMU1) aufweist, die ausgebildet ist, die positionsabhängigen Daten (LxSx) in Bezug zur jeweiligen Empfangsstation (GW1, GW2) über eine Zeitdauer abzuspeichern und daraus eine Signalfeldstärkekarte um die jeweiligen Empfangsstationen (GW1, GW2) im Empfangsgebiet (1) zu erzeugen und darzustellen;
d) die Empfangsstation (GW1, GW2) ausgebildet ist, Ihre Empfangsstations-Ortsdaten (L5-L6) automatisch zu bestimmen und zusammen mit den positionsabhängigen Daten (LxSx) an die Positionsdatenauswerteeinheit (DMU1) weiterzuleiten; und **dadurch gekennzeichnet, dass**
e) die Positionsdatenauswerteeinheit (DMU1) ausgebildet ist, sowohl die positionsabhängigen Daten (LxSx) um die dazugehörige Empfangsstation (GW1, GW2) herum abzubilden, als auch dabei eine Verschiebung der dazugehörigen Empfangsstation (GW1, GW2) gemäß der übermittelten Empfangsstations-Ortsdaten (L5-L6) zu berücksichtigen.

2. Die Systemvorrichtung gemäß Anspruch 1, zusätzlich umfassend den mindestens einen Sender (SE1-SE4), der jeweils die Nutzdaten (D1-D4) und ortsabhängige Positionsdaten (L1-L4) bestimmt und als die jeweilige Informationsdaten (I1-I4) drahtlos aussendet.

3. Die Systemvorrichtung gemäß einem oder mehreren der vorstehenden Ansprüche, wobei die jeweilige Empfangsstation (GW1, GW2) ausgebildet ist, an den Endempfänger (ER1) jeweils gleiche Basisdaten aus Nutzdaten (D1-D4) und Sensorkennung ohne die positionsabhängigen Daten (LxSx) weiterzuleiten, so dass für eine Nutzdatenübertragung zum Endempfänger (ER1) sowohl die Sender (SE1-SE4) verwendet werden können, die die positionsabhängigen Daten (LxSx) mitsenden, also auch solche Sender verwendet werden können, mit denen keine positionsabhängigen Daten (LxSx) bestimmbar sind.

4. Die Systemvorrichtung gemäß einem oder mehreren der vorstehenden Ansprüche, wobei die Positionsdatenauswerteeinheit so ausgebildet ist, dass aus verschiedenen Feldstärkewerten, die von mindestens zwei verschiedenen Empfangsstationen zu einem gleichen Sender bestimmt und weitergeleitet worden sind, nach einem Triangulationsprinzip weitere Ortsdaten bestimmt werden, die zur Ortsbestimmung des jeweiligen Senders mitberücksichtigt werden.

5. Verfahren zu einer Übertragung und Bestimmung von positionsabhängigen Daten (LxSx) mindestens eines Senders (SE1-SE4), der Nutzdaten (D1-D4) und ortsabhängige Positionsdaten (L1-L4) als Informationsdaten (I1-I4) drahtlos aussendet, in Bezug zu mindestens einer Empfangsstation (GW1, GW2) in einem Empfangsgebiet (1), folgende Schritte umfassend:
a) Empfangen durch die jeweilige Empfangsstation (GW1, GW2) der jeweiligen Informationsdaten (I1-I4) und zusätzliches Bestimmen eines jeweiligen Signalfeldstärkewerts (S1-S4);
b) Bestimmen der positionsabhängigen Daten (LxSx) des jeweiligen Senders (SE1-SE4) durch die jeweilige Empfangsstation (GW1, GW2), wobei die ortsabhängigen Positionsdaten (L1-L4) aus den jeweiligen Informationsdaten (I1-I4) extrahiert werden und der jeweilige Signalfeldstärkewert (S1-S4) hinzugefügt wird;
c) Weiterleiten der positionsabhängigen Daten (LxSx) zu einer externen Positionsdatenauswerteeinheit (DMU1), und Weiterleiten der jeweiligen Informationsdaten (I1-I4) oder zumindest daraus der Nutzdaten (D1-D4) an einen Endempfänger (ER1);
d) Abspeichern der positionsabhängigen Daten (LxSx) zu der jeweiligen Empfangsstation (GW1, GW2) in der Positionsdatenauswerteeinheit (DMU1) und Bestimmen und Darstellen von Signalfeldstärken im Empfangsgebiet (1), die aus den gespeicherten jeweiligen Signalfeldstärkewerten (S1-S4) erzeugt werden **gekennzeichnet durch**
e) örtlich Verschieben der mindestens einen Empfangsstation (GW1, GW2), Bestimmen deren Empfangsstations-Ortsdaten (L5-L6), und Weiterleiten der Empfangsstations-Ortsdaten (L5-L6) zusammen mit den positionsabhängigen Daten (LxSx) an die Positionsdatenauswerteeinheit (DMU1).

6. Das Verfahren gemäß Anspruch 5, wobei durch die Empfangsstation (GW1, GW2) aus den Informationsdaten (I1-I4) die ortsabhängigen Positionsdaten (L1-L4) herausgefiltert und entsprechend ohne die ortsabhängigen Positionsdaten (L1-L4) an den Endempfänger (ER1) weitergeleitet werden.

7. Verfahren gemäß einem der vorstehenden Ansprüche 5 oder 6, wobei durch die Positionsdatenauswerteeinheit (DMU1) aus den Signalfeldstärken mindestens eine Signalfeldstärke-Höhenlinie um die jeweilige Empfangsstation (GW1, GW2) herum im Empfangsgebiet (1) bestimmt wird.

8. Verfahren gemäß einem der vorstehenden Ansprüche 5 - 7, wobei durch die Positionsdatenauswerteeinheit (DMU1) aus den positionsabhängigen Daten (LxSx) zeitliche Veränderungen der Signalfeldstärken bestimmt werden können.

## Claims

1. System apparatus for determining position-dependent data (LxSx) of at least one transmitter (SE1-SE4) which wirelessly transmits user data (D1-D4) and location-dependent position data (L1-L4) as information data (11-14) relative to a respective receiving station (GW1, GW2) in a receiving area (1); comprising:
a) the at least one receiving station (GW1, GW2) which contains at least one receiver (RE1) that receives the information data (I1-I4) with a respective signal area strength value (S1-S4) from the respective transmitter (SE1-SE4);
b) the respective receiving station (GW1, GW2) containing a data separator (DS1) which extracts the location-dependent position data (L1-L4) of the transmitter (SE1-SE4) from the respective information data (11-14) and forwards them, together with the respective signal area strength value (S1-S4), as position-dependent data (LxSx) to an external position data evaluation unit (DMU1), and which additionally forwards the respective information data (11-14), or at least the user data (D1-D4) thereof, to a final receiver (ER1);
c) the system apparatus containing the position data evaluation unit (DMU1) which is adapted to store the position-dependent data (LxSx) in relation to the respective receiving station (GW1, GW2) over a time period and to generate and display therefrom a signal area strength chart around the respective receiving stations (GW1, GW2) in the receiving area (1);
d) the receiving station (GW1, GW2) being adapted to automatically determine its receiving station location data (L5-L6) and forward them, together with the position-dependent data (LxSx), to the position data evaluation unit (DMU1); and **characterized in that**
e) the position data evaluation unit (DMU1) is adapted both to map the position-dependent data (LxSx) around the respective receiving station (GW1, GW2) and to take into account, during this process, a displacement of the respective receiving station (GW1, GW2) in accordance with the transmitted receiving station location data (L5-L6).

2. The system apparatus according to Claim 1, additionally comprising the at least one transmitter (SE1-SE4) which determines the user data (D1-D4) and the location-dependent position data (L1-L4), respectively, and wirelessly transmits them as the respective information data (11-14).

3. The system apparatus according to one or more of the above Claims, the respective receiving station (GW1, GW2) being adapted to forward to the final receiver (ER1) equal base data, respectively, consisting of user data (D1-D4) and sensor ID without the position-dependent data (LxSx), so that for a transmission of user data to the final receiver (ER1), the transmitters (SE1-SE4) which include position-dependent data (LxSx) in their transmission can be used as well as those transmitters with which no position-dependent data (LxSx) can be determined.

4. The system apparatus according to one or more of the above Claims, the position data evaluation unit being configured such that from different area strength values which have been determined and forwarded to a same transmitter from at least two different receiving stations, additional location data are determined according to a triangulation principle which are taken into account for determining the location of the respective transmitter.

5. Method of transmitting and determining position-dependent data (LxSx) of at least one transmitter (SE1-SE4) which wirelessly transmits user data (D1-D4) and location-dependent position data (L1-L4) as information data (11-14) in relation to at least one receiving station (GW1, GW2) in a receiving area (1), comprising the following steps:
a) receiving the respective information data (11-14) by the respective receiving station (GW1, GW2) and additionally determining a respective signal area strength value (S1-S4);
b) determining the position-dependent data (LxSx) of the respective transmitter (SE1-SE4) by means of the respective receiving station (GW1, GW2), with the location-dependent position data (L1-L4) being extracted from the respective information data (11-14) and the respective signal area strength value (S1-S4) being added;
c) forwarding the position-dependent data (LxSx) to an external position data evaluation unit (DMU1) and forwarding the respective information data (11-14) or at least the user data (D1-D4) thereof to a final receiver (ER1);
d) storing the position-dependent data (LxSx) for the respective receiving station (GW1, GW2) in the position data evaluation unit (DMU1) and determining and displaying signal area strengths in the receiving area (1) which are generated from the respective stored signal area strength values (S1-S4); **characterized by**
e) local displacement of the at least one receiving station (GW1, GW2), determining of its receiving station location data (L5-L6) and forwarding the receiving station location data (L5-L6) to the position data evaluation unit (DMU1) together with the position-dependent data (LxSx).

6. The method according to Claim 5, where the location-dependent position data (L1-L4) are filtered out from the information data (11-14) by the receiving station (GW1, GW2) and are accordingly forwarded to the final receiver (ER1) without the location-dependent position data (L1-L4).

7. Method according to one of the above Claims 5 or 6, where by means of the position data evaluation unit (DMU1), at least one signal area strength contour line around the respective receiving station (GW1, GW2) is determined in the receiving area (1) from the signal area strengths.

8. Method according to one of the above Claims 5-7, where by means of the position data evaluation unit (DMU1), changes over time of the signal area strengths can be determined from the position-dependent data (LxSx).

## Revendications

1. Dispositif système pour déterminer des données dépendantes de la position (LxSx) d'au moins un émetteur (SE1-SE4), qui transmet sans fil des données utiles (D1-D4) et des données de position dépendantes de l'emplacement (L1-L4) en tant que données d'information (11-14), en relation avec une station de réception respective (GW1, GW2) dans une zone de réception (1), comprenant:
a) la au moins une station de réception (GW1, GW2), qui présente respectivement un récepteur (RE1), qui reçoit les données d'informations (11-14) de l'émetteur respectif (SE1-SE4) avec une valeur d'intensité de champ de signal respective (S1-S4) ;
b) dans lequel la station de réception respective (GW1, GW2) présente un séparateur de données (DS1) qui extrait les données de position dépendantes de l'emplacement (L1-L4) de l'émetteur (SE1-SE4) à partir des données d'informations respectives (11-14) et, conjointement à la valeur d'intensité de champ de signal respective (S1-S4), transmet les données dépendantes de la position (LxSx) à une unité d'évaluation de données de position externe (DMU1) et qui transmet en outre les données d'information respectives (11-14) ou au moins les données utiles (D1-D4) à partir de là vers un récepteur final (ER1);
c) dans lequel le dispositif système présente une unité d'évaluation de données de position (DMU1), qui est conçue pour sauvegarder pendant un certain temps les données dépendantes de la position (LxSx) en relation avec la station de réception respective (GW1, GW2) et à partir de là générer et afficher une carte d'intensité de champ de signal pour les stations de réception respectives (GW1, GW2) dans la zone de réception (1) ;
d) dans lequel la station de réception (GW1, GW2) est conçue pour déterminer automatiquement ses données de localisation de station de réception (L5-L6) et les transmettre à l'unité d'évaluation de données de position (DMU1) avec les données dépendantes de la position (LxSx); et **caractérisé en ce que**
e) l'unité d'évaluation de données de position (DMU1) est conçue tant pour cartographier les données dépendantes de la position (LxSx) autour de la station de réception associée (GW1, GW2) que pour prendre en compte un décalage de la station de réception (GW1, GW2) associée en fonction des données de localisation de la station de réception transmises (L5-L6).

2. Dispositif système selon la revendication 1, comprenant en outre au moins un émetteur (SE1-SE4), qui détermine les données utiles (D1-D4) et les données de position dépendantes de l'emplacement (L1-L4) et les transmet sans fil en tant que données d'informations respectives (11-14).

3. Dispositif système selon une ou plusieurs des revendications précédentes, dans lequel la station de réception respective (GW1, GW2) est conçue pour transmettre les mêmes données de base provenant des données utiles (D1-D4) et de l'identification du capteur au récepteur final (ER1) sans les données dépendantes de la position (LxSx), de sorte que pour une transmission de données utiles au récepteur final (ER1), les deux émetteurs (SE1-SE4) puissent être utilisés, qui envoient également les données dépendantes de la position (LxSx), et il est également possible d'utiliser des émetteurs avec lesquels aucune donnée dépendante de la position (LxSx) ne peut être déterminée.

4. Dispositif système selon une ou plusieurs des revendications précédentes, dans lequel l'unité d'évaluation de données de position est conçue de telle sorte que d'autres données de localisation soient déterminées à partir de différentes valeurs d'intensité de champ, qui ont été déterminées et transmises à un même émetteur par au moins deux stations de réception différentes selon un principe de triangulation, lesquelles sont prises en compte pour la détermination de localisation de l'émetteur respectif.

5. Procédé de transmission et de détermination de données dépendantes de la position (LxSx) d'au moins un émetteur (SE1-SE4), qui transmet sans fil des données utiles (D1-D4) et des données de position dépendantes de l'emplacement (L1-L4) en tant que données d'information (11-14), en relation avec au moins une station de réception (GW1, GW2) dans une zone de réception (1), comprenant les étapes suivantes de:
a) réception par la station de réception respective (GW1, GW2) des données d'information (11-14) et détermination supplémentaire d'une valeur d'intensité de champ de signal respective (S1-S4) ;
b) détermination des données de position dépendantes (LxSx) de l'émetteur respectif (SE1-SE4) par la station de réception respective (GW1, GW2), dans lequel les données de position dépendantes de l'emplacement (L1-L4) sont extraites des données d'informations respectives (11-14) et la valeur d'intensité de champ de signal respective (S1-S4) est ajoutée;
c) transmission des données dépendantes de la position (LxSx) vers une unité d'évaluation de données de position (DMU1) externe et transmission des données d'information respectives (11-14) ou au moins des données utiles (D1-D4) à partir de là vers un récepteur final (ER1);
d) la sauvegarde des données dépendantes de la position (LxSx) pour la station de réception respective (GW1, GW2) dans l'unité d'évaluation de données de position (DMU1) et la détermination et l'affichage des intensités de champ de signal dans la zone de réception (1), qui sont générées à partir des valeurs d'intensité de champ de signal respectives mémorisées (S1-S4), **caractérisé par**
e) le décalage local d'au moins une station de réception (GW1, GW2), la détermination de ses données de localisation de station de réception (L5-L6) et la transmission des données de localisation de la station de réception (L5-L6) conjointement aux données dépendantes de la position (LxSx) à l'unité d'évaluation de données de position (DMU1).

6. Procédé selon la revendication 5, dans lequel les données de position dépendantes de l'emplacement (L1-L4) sont filtrées par la station de réception (GW1, GW2) à partir des données d'information (11-14) et transmises au récepteur final (ER1) sans les données de position dépendantes de l'emplacement (L1-L4).

7. Procédé selon une des revendications précédentes 5 ou 6, dans lequel au moins une ligne de hauteur d'intensité de champ de signal autour de la station de réception respective (GW1, GW2) dans la zone de réception (1) est déterminée par l'unité d'évaluation de données de position (DMU1) à partir des intensités de champ de signal.

8. Procédé selon une des revendications précédentes 5 à 7, dans lequel des modifications temporelles des intensités de champ de signal peuvent être déterminées par l'unité d'évaluation de données de position (DMU1) à partir des données dépendantes de la position (LxSx).
